Europäisches Patentamt

European Patent Office

Office européen des brevets

(11) Veröffentlichungsnummer: **0 245 775**

**A2**

(12) **EUROPÄISCHE PATENTANMELDUNG**

(21) Anmeldenummer: **87106602.3**

(22) Anmeldetag: **07.05.87**

(51) Int. Cl.⁴: **C02F 1/04**

(30) Priorität: **10.05.86 DE 3615873**
**28.11.86 DE 3640728**

(43) Veröffentlichungstag der Anmeldung:
**19.11.87 Patentblatt 87/47**

(84) Benannte Vertragsstaaten:
**BE ES FR GB GR IT NL**

(71) Anmelder: **Cenal, Mehmet Ali**
**Blütenweg 3**
**D-2842 Lohne(DE)**

(72) Erfinder: **Cenal, Mehmet Ali**
**Blütenweg 3**
**D-2842 Lohne(DE)**

(74) Vertreter: **Jabbusch, Wolfgang, Dr.**
**Elisabethstrasse 6**
**D-2900 Oldenburg(DE)**

(54) **Verfahren und Einrichtung zum Aufbereiten von verschmutzten Flüssigkeiten.**

(57) Die Erfindung betrifft ein Verfahren und eine Einrichtung zum Aufbereiten verschmutzter Flüssigkeiten wie z.B. Gülle oder Abwasser, bei dem die Flüssigkeit erwärmt wird, wobei die aufzubereitende Flüssigkeit wenigstens auf eine der Siedetemperatur des in ihr enthaltenen Wassers entsprechende Temperatur erwärmt wird, und der entstehende Wasserdampf weggeleitet und wenigstens bis auf Kondensationstemperatur gekühlt wird.

## Verfahren und Einrichtung zum Aufbereiten von verschmutzten Flüssigkeiten

Die Erfindung betrifft ein Verfahren und eine Einrichtung zum Aufbereiten von verschmutzten Flüssigkeiten wie z.B. Gülle, Abwasser od.dgl., bei dem die aufzubereitende Flüssigkeit erwärmt wird.

Eine Beseitigung verschmutzter Flüssigkeiten bereitet bekanntlich seit eh und je Probleme, die im Verlaufe der Zeit eher zu-als abgenommen haben. Ein typisches und besonders problematisches Beispiel hierfür ist Gülle. Bei Gülle handelt es sich bekanntlich um ein in der Landwirtschaft bzw. Viehwirtschaft anfallendes Gemisch aus Tierkot, - harn, Kurzstroh und Wasser, welches früher i.a. in häufig mit einem Rührwerk versehenen Güllegruben gesammelt bzw. zwischengelagert und von dort aus in ebenem Gelände mittels eines Güllewagens ausgefahren und möglichst auf die Getreidestoppel eines Getreidefeldes bzw. auf Grünland ausgebracht bzw. im Gebirge über mobile Rohr-oder Schlauchleitungen mittels Güllepumpen verrieselt oder auch verregnet wurde, wobei überschüssige Gülle nicht selten auch in Wasserläufe verkippt wurde.

Eine derartige Verwertung bzw. Beseitigung von Gülle ist nicht nur wegen der damit verbundenen Geruchsbelästigung unerwünscht, sondern führt auch zu einer Übersäuerung des Bodens und anderen nachteiligen Wirkungen, so daß eine unbegrenzte derartige Gülleverwertung bzw. eine derartige Güllebeseitigung zwischenzeitlich durch einschlägige Vorschriften untersagt ist.

Da in der Gülle außer Bestandteilen, die für eine Düngung geeignet sind, Bestandteile vorhanden sind, aus denen brennbare Gase zu gewinnen sind, hat man insbesondere seit der sog. ersten und zweiten Energiekrise versucht, Gülle unter Gewinnung derartiger Biogase, die im wesentlichen aus einer Mischung aus Methan ($CH_4$) und Kohlendioxid ($CO_2$) bestehen, so aufzubereiten, daß sie danach - zugleich unter erheblicher Abschwächung der Geruchsbelästigung - als verträglicherer Dünger zu verwerten ist. Hierfür ist bspw. vorgeschlagen worden, Gülle in einen Reaktor zu geben, der einen mit einem Zulauf und einem Ablauf versehenen gasdichten Behälter aufweist, welcher mit Rührwerken versehen ist, und von dem eine Gasentnahmeleitung abzweigt, wobei auch bereits eine gewisse Erwärmung auf eine Temperatur zwischen 30 und 40°C vorgesehen ist, um die Vergärung der Gülle zu beschleunigen.

Mit derartigen Aufbereitungsverfahren bzw. Einrichtungen ist zwar eine nicht unbeträchtliche Biogasmenge zu produzieren, die bspw. für eine Brauchwassererwärmung oder auch für Heizzwecke zu verwenden ist, doch verbleibt trotz des nicht unbeträchtlichen apparativen und energetischen Aufwandes letztlich ein Substrat, welches aus den oben angegebenen Gründen nicht unbegrenzt auf landwirtschaftliche Nutz-oder Grünflächen gegeben werden kann, so daß die bestehende Problematik durch eine derartige Aufbereitung von Gülle insbesondere dann nicht gelöst ist, wenn sie in verhältnismäßig großen Mengen anfällt.

Aus der ein Verfahren zur biologischen und thermischen Behandlung von insbesondere Gülle betreffenden DE-OS 23 16 476 - die sich zur Aufgabe gestellt hat, tierische Exkremente ohne Verwendung fremder Zusatzstoffe so zu behandeln, daß das Endprodukt nur noch aus einem Feststoff besteht, der auch bei längerer Lagerung biologisch stabil bleibt, demgemäß auch bei evtl. Wiederbefeuchtung keinen Geruch mehr entwickelt, frei von Krankheitserregern ist, einfach zu handhaben ist und nach einem Ausbringen auf das Land weder das Grund-noch das Oberflächenwasser verschmutzt - ist es bekannt, die unmittelbar aus dem Stall herausgeführte Gülle soweit mit Trockengut anzureichern, daß ein feuchtes, krümeliges Gemenge entsteht, welches sodann (in Schütthöhen von mehreren Metern) in Silos gelagert wird und ein weitgehend gleichmäßiges, feinporiges Luftvolumen enthält, welches einen wenigstens zwei Tage anhaltenden, exothermen mikroviellen Umsetzungsprozeß mit Temperaturen bis über 70°C sicherstellt. Dabei werden außer Wärme Wasserdampf und $CO_2$ freigesetzt, wobei die bei der biologischen Erwärmung entstehenden Abgase (einschließlich des Wasserdampfes) vor einem Kompaktieren nach außen abgeführt werden.

Die bei einer biologischen Erwärmung entstehende Gülletemperatur überschreitet die angegebene Temperatur von ca. 70°C jedoch nicht nennenswert, wenn diese überhaupt erreicht wird, so daß bei diesem vorbekannten Verfahren lediglich ein geringer Teil von Wasser in Dampfform aus der Gülle entweicht, der in der DE-OS 23 16 476 mit nur etwa 5 % angegeben ist.

Ein weiteres typisches Beispiel für die vorliegende Problematik ist die Beseitigung von Abwasser. Dabei spielen industrielle Abwässer zwar eine besondere Rolle, da sie regelmäßig mit unterschiedlichsten Chemikalien angereichert sind, nicht selten relativ hohe Temperaturen aufweisen etc., so daß sie für die Umwelt besonders schädlich sind, doch bereitet auch Haushaltsabwasser erhebliche Probleme, und zwar nicht nur in dichtbesiedelten Gegenden, in denen eine entsprechend große Abwassermenge anfällt, sondern auch (gerade) in weniger dichtbesiedelten Gegenden, insbesondere wenn dort (noch) keine Abwasser-Kanalisation vorhanden ist.

Aber auch wenn anzufallendes Haushaltsabwasser über ein entsprechendes Rohrleitungssystem in einen Abwasserkanal geleitet wird, bestehen die vorstehend angesprochenen Probleme fort und werden mit vorhandener Kanalisation allenfalls örtlich verlagert.

Bekanntlich wird (Haushalts-)Abwasser nicht selten in natürliche Gewässer (insbesondere Flüsse) geleitet, um sich auf diese Weise des Abwasserproblems zu entledigen. Die hiermit verbundenen negativen Einflüsse auf die Umwelt, hygienische Probleme etc. sind jedoch hinlänglich bekannt und bedürfen daher keiner Vertiefung, um darzutun, daß eine derartige Abwasserbeseitigung keine befriedigende Lösung dieses Problems darstellt.

Daneben ist es bekannt, in aller Regel stark verschmutztes (Haushalts-)Abwasser in Sammelbecken od.dgl. zu leiten, um dort eine biologische und damit natürliche Aufbereitung durchzuführen, bevor das in dem Abwasser enthaltene Wasser dann im Boden versickert wird, was nicht selten auch bereits unmittelbar nach dem Abwasseranfall erfolgt. Auch diese Art der Abwasserbeseitigung ist ersichtlich in höchstem Maße unbefriedigend und stellt keine Lösung für das vorstehend umrissene Problem dar.

Der vorliegenden Erfindung liegt die Aufgabe zugrunde, ein Verfahren und eine Einrichtung zum Aufbereiten verschmutzter Flüssigkeiten zu - schaffen, mittels derer diese so aufzubereiten sind, daß das entstehende flüssige Endprodukt sich praktisch ohne beachtliche Geruchsbelästigung und vor allem ohne negative Beeinträchtigung des Bodens ausbringen läßt, und daß die bei der Aufbereitung ggf. entstehenden gasförmigen und festen Endprodukte sich energie-bzw. wärmeerzeugend verwerten lassen.

Als Lösung des verfahrensmäßigen Teils dieser Aufgabe ist erfindungsgemäß vorgesehen, daß die aufzubereitende Flüssigkeit auf eine der Siedetemperatur des in ihr enthaltenen Wassers entsprechende Temperatur erwärmt wird, und daß der entstehende Wasserdampf weggeleitet und wenigstens bis auf Kondensationstemperatur gekühlt wird.

Das erfindungsgemäße Verfahren unterscheidet sich mithin von vorbekannten Verfahren, wie sie z.B. für eine Aufbereitung von Gülle bekannt sind, bei denen zur Förderung der Gärung eine gewisse Erwärmung über die Umgebungstemperatur vorgenommen wird, grundsätzlich dadurch, daß die aufzubereitende Flüssigkeit so stark erwärmt wird, daß das in ihr enthaltene Wasser verdampft. Mit dieser Arbeitsweise ist nicht nur eine Trennung der festen (und sonstigen gasförmigen) Bestandteile von den flüssigen Bestandteilen zu erzielen, sondern man erhält bei dem erfindungsgemäß vorgesehenen Destillationsvorgang überraschend reines Wasser, welches - ggf. nach einer weiter unten noch beschriebenen weiteren Aufbereitung - dem Boden wieder zugeleitet werden kann, so daß es dem Wasserhaushalt nicht verloren geht.

Um bei einer Aufbereitung von Gülle eine möglichst große Biogasmenge zu gewinnen und gleichzeitig den biologischen Abbauvorgang zu begünstigen, der zugleich zu einer nicht unbeträchtlichen Erhöhung des pH-Wertes führen kann, kann es zweckmäßig sein, die Gülle vor dem Erwärmen zwischenzulagern. Mit dem Ziel einer möglichst großen Biogasgewinnung kann es in Ausgestaltung der vorliegenden Erfindung weiterhin zweckmäßig sein, die aufzubereitende Flüssigkeit zunächst auf eine unterhalb der Wasser-Siedetemperatur liegende erste Arbeitstemperatur zu erwärmen und über ein vorgegebenes Zeitintervall auf dieser Temperatur zu halten, wobei zweckmäßigerweise während dieser Aufbereitungsphase das entstehende Biogas einem Gasreservoir bzw. einem Brenner zugeleitet wird. Eine derartige Erwärmung auf eine erste Arbeitstemperatur, die bei dem erfindungsgemäßen Verfahren vorzugsweise höher liegt als 50°C und bis zu ca. 80°C betragen kann, kann deshalb besonders vorteilhaft sein, weil hierbei verhältnismäßig wenig Feuchtigkeit mit dem Biogas entweicht, während bei einer sogleich vorgenommenen Erwärmung auf Wasser-Siedetemperatur entstehendes Biogas zusammen mit dem Wasserdampf entweicht und von diesem getrennt werden muß, wenn das Biogas einer Verwertung durch Verbrennung zugeführt werden soll.

Weiterhin hat es sich als zweckmäßig erwiesen, wenn das beim Kühlen des Wasserdampfes entstehende Kondensat vor einem Verrieseln od.dgl. zwischengelagert wird. Dieses kann ggf. in einem entsprechenden Behältnis unter Rühren und/oder Umwälzung erfolgen oder aber in einem Setzbecken od.dgl., wobei es je nach Beschaffenheit der aufzubereitenden Flüssigkeit und des beim Erhitzen entstehenden Dampfes auch zweckmäßig sein kann, beide Maßnahmen nebeneinander vorzusehen.

Die erfindungsgemäß vorgesehene Kühlung des beim Verdampfen entstehenden Dampfes kann ersichtlich auf unterschiedlichster Art und Weise erfolgen. Eine besonders zweckmäßige und wirtschaftliche Kühlung erfolgt erfindungsgemäß dadurch, daß der Wasserdampf und/oder das aus ihm entstehende bzw. entstandene Kondensat im Wärmeaustausch mit Brauchwasser gekühlt wird, welches z.B. in einem landwirtschaftlichen Betrieb (einschließlich Wohnhaus) benötigt wird. Ist die Temperatur des Kühlwassers hinreichend groß, so kann dieses ggf. auch zu Heizzwecken verwendet werden, und zwar sowohl für Gebäude, Gewächshäuser etc. des betreffenden landwirtschaftlichen Betriebes als auch für eine Vorwärmung der aufzubereitenden Flüssigkeit bzw. sogar eine Erwärmung auf die erste Arbeitstemperatur.

Für eine optimale Wärmerückgewinnung kann es ggf. zweckmäßig sein, wenigstens einen Teil des beim Erwärmen entstehenden Dampfes zu überhitzen und nach einer Reinigung einem Stromaggregat zuzuführen, wobei die hierdurch zu gewinnende elektrische Energie bspw. zum Erwärmen aber auch für andere Zwecke verwendet werden kann.

Der nach dem weitgehenden bzw. vollständigen Verdampfen des in der Flüssigkeit enthaltenen Wassers verbleibende Feststoff wird vorzugsweise getrocknet und im Falle von Gülle gepreßt, wobei es sich als zweckmäßig erwiesen hat, wenn er vor dem vollständigen Austrocknen - und selbstverständlich ggf. vor einem vorgesehenen Preßvorgang - mit wenigstens einem brennbaren Füllstoff wie bspw. Torf, Sägemehl od.dgl. vermengt wird.

Bei der Anwendung des erfindungsgemäßen Verfahrens auf eine Aufbereitung von (Haushalts-)Abwasser hat sich gezeigt, daß der Ammoniak-Anteil des nach Erwärmung und anschließender Kondensation entstandenen Aufbereitungsproduktes sehr groß ist, um ihn in einen Klärsee zu geben und von dort aus zu verrieseln. Dieses ist zwar grundsätzlich möglich, doch führt der relativ hohe Ammoniak-Anteil zu einer negativen Umweltbeeinträchtigung, die bei dem hier vorliegenden Problem der (Haushalts-)Abwasserbeseitigung bzw. -aufbereitung möglichst vermieden werden soll.

Es ist hierfür demgemäß bevorzugt vorgesehen, daß die kondensierte Flüssigkeit vor einem Verrieseln in den Untergrund in/durch ein bepflanztes Sammelbecken geleitet wird, welches mit einer Bepflanzung versehen ist, die Ammoniak aus der kondensierten Flüssigkeit aufnimmt, wobei es sich bei dem Sammelbecken bevorzugt nicht um einen (technischen) Behälter, sondern um einen natürlichen bzw. natürlich angelegten Klärsee od.dgl. handeln kann, der bevorzugt und zweckmäßigerweise so angelegt ist, daß er verhältnismäßig umfangreich mit derartigen Pflanzen zu bepflanzen ist.

Hierfür kann es besonders zweckmäßig sein, das als natürlichen Klärsee oder -teich ausgebildete Sammelbecken mit zahlreichen Inseln oder/und Halbinseln zu versehen, um auf diese Weie zu gewährleisten, daß die bezüglich ihres Ammoniakgehaltes ent-aufzubereitende kondensierte Flüssigkeit mit möglichst vielen Pflanzen der beschriebenen Eigenschaft in Berührung kommt.

Da der Abwasseranfall jahreszeitlich bedingt unterschiedlich groß ist (im Winter fällt in der Regel mehr Abwasser an als im Sommer), kann es ggf. zweckmäßig sein, die kondensierte Flüssigkeit vor dem Einleiten in das Sammelbecken zwischenzulagern, so daß dann in der warmen Jahreszeit außer dem akut anfallenden Abwasser aus einem Zwischenspeicher ent-aufzubereitendes Abwasser in den Klärsee od.dgl. gegeben und anschließend verrieselt werden kann. Die hierfür erforderlichen Investitionskosten werden dadurch im wesentlichen kompensiert, daß der Klärsee od.dgl. entsprechend kleiner ausgelegt werden kann, wenn er auf die jährliche Durchschnittsmenge ausgelegt wird.

Wird beispielsweise Haushaltsabwasser erfindungsgemäß aufbereitet, so wird bei der zunächst vorgenommenen Erwärmung bis über die Wassersiedetemperatur hinaus das vorhandene bzw. entstehende Biogas bereits vorzeitig ausgetrieben (in aller Regel nämlich schon bis zu ca. 40° C). Die nach dem Sieden kondensierte Flüssigkeit wird dann - ggf. über einen Vorfluter - entweder zunächst in einen Zwischenspeicher oder aber sogleich in das Sammelbecken (= mit Macrophyten od.dgl. bepflanzter Klärsee od.dgl.) gegeben, in dem die Beplanzung das in der kondensierten Flüssigkeit enthaltene Ammoniak eliminieren, so daß das Wasser am Ende der Aufbereitung als hervorragend reines Wasser verrieselt und dem Grundwasser wieder zugeführt werden kann.

Für die Durchführung des erfindungsgemäßen Verfahrens ist ein mit wenigstens einer Heizeinrichtung beheizbarer Aufnahmebehälter vorgesehen, der mit einem Einlaß für die aufzubereitende Flüssigkeit sowie wenigstens einem Auslaß für das entstehende Biogas bzw. den beim Verdampfen entstehenden Wasserdampf versehen ist, und der - zweckmäßigerweise an seinem unteren Endabschnitt - eine Entnahmeöffnung für die nach dem Verdampfen verbleibenden Feststoffe aufweist, wobei der den Wasserdampf abführenden Leitung eine Kühleinrichtung zugeordnet ist, mittels welcher der Wasserdampf zu kondensieren ist.

Hierzu sei darauf verwiesen, daß aus der DE-OS 29 14 802 bereits ein Gärbehälter zur Ausfaulung organischer Substanzen bekannt ist, der außer einen Einlaß für die aufzubereitende Substanz auch einen mit einer Gasabführleitung verbundenen Auslaß zur Fortleitung der bei der Gärung entstehenden Gase und darüber hinaus eine an eine Warmwasserheizung anschließbare Heizschlange aufweist, mittels welcher der Faulschlamm zur Förderung des Gärungsprozesses zu erwärmen ist. Überdies ist der bekannte Gärbehälter mit einer verschließbaren Entnahmeöffnung für den vergorenen Faulschlamm versehen.

Bevorzugte Ausgestaltungen der vorliegenden Erfindung sind in den Unteransprüchen beschrieben.

Die Erfindung ist nachstehend an einem Ausführungsbeispiel unter Bezugnahme auf eine stark schematisierte Zeichnung weiter erläutert.

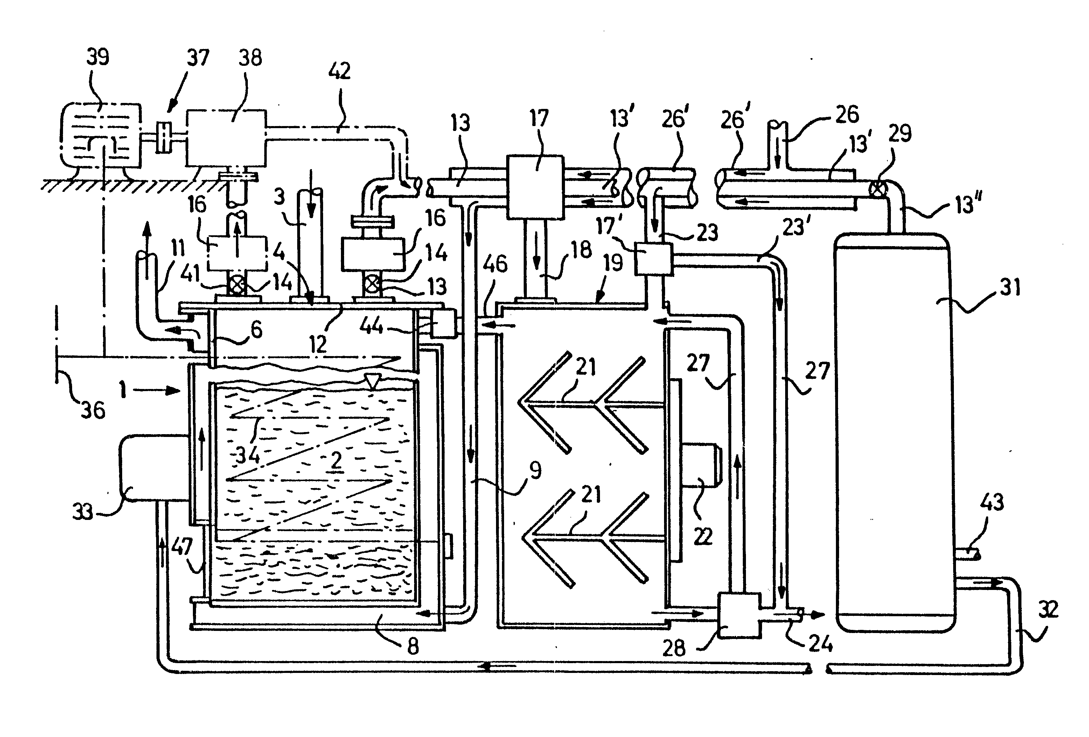

Die in der Zeichnung schematisch dargestellte Einrichtung zum Aufbereiten von Gülle weist einen Aufnahmebehälter 1 für Gülle 2 auf, die ihm über eine Leitung 3 an einem Einlaß 4 zuzuführen ist. Der Aufnahmebehälter 1 besitzt eine innere Wandung 6 und eine mit Abstand zu dieser angeordnete äußere Wandung 7, wobei der Zwischenraum 8 eine Erwärmungskammer bildet, in welche über eine Leitung 9 erwärmtes Wasser zu leiten ist, welches den Zwischenraum 8 nach einer Abgabe von Wärme an die Gülle 2 wieder über eine Leitung 11 verläßt, wobei diese Leitung 11 zu einem in der Zeichnung nicht dargestellten Wärmeaustauscher führt, in dem Brauchwasser erwärmt wird.

Von dem Deckel 12 des Aufnahmebehälters 1 zweigt eine mit einem Absperrorgan 14 versehene Leitung 13 ab, in welcher als Reinigungseinrichtung für durch die Leitung 13 abgeführten Dampf ein Filter 16 angeordnet ist. Die Leitung 13 führt zu einem Drei-Wege-Ventil 17, welches so geschaltet sein kann, daß Kondensat über eine Leitung 18 in einen zweiten Behälter 19 gelangt, in dem Rührwerke 21 angeordnet sind, die mittels eines Antriebsmotors 22 anzutreiben sind, oder das Drei-Wege-Ventil 17 kann so geschaltet sein, daß der durch die Leitung 13 herangeführte Dampf durch eine Leitung 13' weitergeführt wird, wobei der Dampf so gekühlt wird, daß er kondensiert und entweder über eine Leitung 23 in den zweiten Behälter 19 strömt oder aber über ein Drei-Wege-Ventil 17' in eine Leitung 23', von wo aus das Kondensat über eine Leitung 24 zu einem in der Zeichnung nicht dargestellten Setzbecken bzw. zu einer Sickergrube gelangt.

Die Kühlung des durch die Leitung 13 herangeführten und in der Leitung 13' weitergeführten Dampfes bzw. Kondensates erfolgt durch Kühlwasser, welches durch eine Leitung 26 herangeführt wird und eine Leitung 26' weitergeführt wird, welche die Leitung 13' (sowie einen Abschnitt mit der Leitung 13) mit äußerem Abstand umgibt, wobei der Dampf bzw. das Kondensat und das Kühlwasser mithin im Gegenstrom strömt. Dabei wird das durch die Leitung 26 herangeführte Kühlwasser durch den Dampf bzw. das Kondensat erwärmt, so daß es bei Erreichen des Zwischenraums 8 eine Erwärmung der Gülle 2 durchführen kann.

An der Außenseite des zweiten Behälters 19 befindet sich eine Leitung 27, in welcher eine Pumpe 28 angeordnet ist. Die Pumpe 28 kann Flüssigkeit aus dem unteren Abschnitt des zweiten Behälters 19 ansaugen und über die Leitung 27 in den oberen Endabschnitt des zweiten Behälters 19 zurückführen.

Wie im oberen rechten Teil der Zeichnung erkennbar ist, ist dort die Leitung 13' mit einem Absperrorgan 29 versehen. Jenseits des Absperrorgans 29 setzt sich die Leitung in einem Abschnitt 13'' fort, der zu einem Gasbehälter 31 zur Aufnahme von Biogas führt. Von dem Gasbehälter 31 führt eine Leitung 32 zu einem Brenner 33, der an dem Aufnahmebehälter 1 angeordnet ist und (ebenfalls) zur Erwärmung der Gülle 2 dienen kann.

Weiterhin ist im mittleren Abschnitt des Aufnahmebehälters 1 eine mit strichpunktierten Linien angedeutete Elektroheizung 34 angeordnet, die von einem elektrischen Netz 36 gespeist werden kann. Ggf. läßt sich die Elektroheizung 34 auch von einem Stromaggregat 37 speisen, welches vorgesehen sein kann, wenn der beim Erwärmen der Gülle 2 entstehende Dampf zu überhitzen ist, so daß er als Energiequelle für eine kleine Dampfturbine 38 dienen kann, mittels welcher dann ein Elektrogenerator 39 zu betreiben ist. In einem solchen Falle zweigt vom Deckel 12 des Aufnahmebehälters 1 eine Leitung 41 ab, die dann ebenfalls mit einem Absperrorgan 14 und einem Filter 16 versehen ist, wobei eine Dampf-bzw. Kondensat-Rückführleitung 42 von der Turbine 38 zur Leitung 13 führt.

Die Arbeitsweise der erfindungsgemäßen Einrichtung nach dem erfindungsgemäßen Verfahren ist wie folgt:

Wenn die aufzubereitende Gülle über die Gülleleitung 3 und dem Gülleeinlaß 4 in den Aufnahmebehälter 1 eingefüllt worden ist, so wird sie zunächst eine Zeit lang zwischengelagert und sodann erwärmt, und zwar zunächst auf eine erste Arbeitstemperatur von ca. 65°C. Diese Erwärmung erfolgt anfänglich ausschließlich durch die Elektroheizung 34. Der Erwärmungsvorgang fördert die Gärung, so daß alsbald - bei geöffnetem Absperrorgan 14 - Biogas durch die Leitung 13 entweicht und über die Leitungsabschnitte 13' und 13'' (bei ebenfalls geöffnetem Absperrorgan 29) in den Gasbehälter 31 gelangt, wobei die Drei-Wege-Ventile 17 und 17' die Leitungen 18 bzw. 23 absperren und auch kein Kühlwasserzufluß durch die Leitung 26 erfolgt. Das Biogas kann entweder in dem Gasbehälter 31 zunächst gesammelt oder aber über eine Leitung 43 zu einer Abzapfstation bzw. einer externen Brennstelle geleitet werden. Es kann jedoch auch sogleich über die Leitung 32 dem Brenner 33 zugeführt und zur Erwärmung der Gülle 2 auf die erste Arbeitstemperatur verwandt werden.

Danach wird das Absperrorgan 29 geschlossen und die Gülle 2 wird so stark erwärmt, daß das in ihr enthaltene Wasser verdampft. Dieser Wasserdampf gelangt über die Leitung 13 in den Leitungsabschnitt 13', wo der Wasserdampf durch Gegenstromwärmeaustausch abgekühlt und kondensiert wird, so daß er über die Leitungen 18 und 23 als Kondensat in den Behälter 19 gelangen kann, wo bei eingeschalteten Rührwerken 21 eine Umwälzung über die Leitung 27 erfolgt und der oben gebildete Schaum mittels einer Pumpe 44 über eine Leitung 46 in den Aufnahmebehälter 1 zurückgepumpt wird, während das relativ klare Wasser nach geraumer Zeit von der Pumpe 28 in die Leitung 24 gepumpt wird, von welcher aus es in ein Absetzbecken oder eine Sickergrube geleitet wird und dem Grundwasser schließlich wieder zugeführt wird.

Ggf. kann das Kondensat auch unter Umgehung des Behälters 19 in die Leitung 24 geleitet werden, wenn eine zusätzliche Reinigung nicht erforderlich ist.

Falls ein Stromaggregat 37 vorgesehen ist, gelangt zumindest ein Teil des Wasserdampfes über die Leitung 41 zur Turbine 38, wobei der von dem Aggregat 37 erzeugte Strom zur Speisung der elektrischen Heizeinrichtung 34 verwendet werden kann.

Nachdem die Gülle 2 weitgehend ausgetrocknet ist, wird sie aus einer im unteren Abschnitt des Aufnahmebehälters 1 vorgesehenen, verschließbaren Öffnung 47 entnommen, mit Sägespäne, Torf u.dgl. gemischt und zu Briketts verpreßt, die sich hervorragend verbrennen lassen, wobei dieser Brennstoff überraschenderweise kaum zu einer beachtlichen Geruchsbelästigung führt.

Es ist erkennbar, daß erfindungsgemäß eine hervorragende Gülleaufbereitung geschaffen worden ist, bei welcher praktisch sämtliche Bestandteile der Gülle nutzbringend zu verwenden sind. Die aus der Gülle zu gewinnenden Biogase können zwecks Energiegewinnung verbrannt werden, das aus der Gülle verdampfte Wasser kann dem Boden als weitgehend klares Wasser wieder zugeführt werden und die übrigbleibenden Feststoffe können ebenfalls als Brennstoff verwandt werden. Hierdurch ergibt sich auch eine überraschend günstige Energiebilanz, zumal die bei der Kondensation entstehende Abwärme zu einem großen Teil zurückgewonnen wird, wobei das ewärmte Kühlwasser die Umgebung nicht etwa belastet, sondern seinerseits im Kreislauf zu Heizzwecken zu verwenden ist. Trotz dieser erzielten Vorteile ist die zur Durchführung des erfindungsgemäßen Verfahrens erforderliche Einrichtung mit verhältnismäßig geringem Aufwand zu erstellen und auch von Laien ohne weiteres zu betreiben, zumal die Erwärmung der Gülle automatisch gesteuert werden kann, was insbesondere dann zweckmäßig ist, wenn - wie bei dem vorstehend beschriebenen Ausführungsbeispiel - die Erwärmung nicht sogleich auf Siedetemperatur erfolgt, sondern zunächst auf eine erste Arbeitstemperatur, bei welcher das Biogas gewonnen wird.

## Ansprüche

1. Verfahren zum Aufbereiten von verschmutzten Flüssigkeiten wie z.B. Gülle, Abwasser od.dgl., bei dem die aufzubereitende Flüssigkeit erwärmt wird, dadurch gekennzeichnet, daß die aufzubereitende Flüssigkeit wenigstens auf eine der Siedetemperatur des in ihr enthaltenen Wassers entsprechende Temperatur erwärmt wird, und daß der entstehende Wasserdampf weggeleitet und wenigstens bis auf Kondensationstemperatur gekühlt wird.

2. Verfahren nach Anspruch 1, dadurch gekennzeichnet, daß die aufzubereitende Flüssigkeit zunächst auf eine unterhalb der Wasser-Siedetemperatur liegende erste Arbeitstemperatur erwärmt wird und über ein vorgegebenes Zeitintervall auf dieser Temperatur gehalten wird, und daß das dabei entstehende Biogas einem Gasreservoir bzw. einem Brenner zugeleitet wird.

3. Verfahren nach Anspruch 2, dadurch gekennzeichnet, daß die aufzubereitende Flüssigkeit auf eine erste Arbeitstemperatur erwärmt wird, die höher ist als 50° C.

4. Verfahren nach Anspruch 3, dadurch gekennzeichnet, daß die aufzubereitende Flüssigkeit auf eine erste Arbeitstemperatur von ca. 80° C vorgewärmt wird.

5. Verfahren nach einem oder mehreren der vorhergehenden Ansprüche, dadurch gekennzeichnet, daß die aufzubereitende Flüssigkeit vor dem Erwärmen auf die erste Arbeitstemperatur zwischengelagert wird.

6. Verfahren nach einem oder mehreren der vorhergehenden Ansprüche, dadurch gekennzeichnet, daß die aufzubereitende Flüssigkeit nach dem Erwärmen auf die erste Arbeitstemperatur vor dem Erwärmen auf die Wassersiedetemperatur zwischengelagert wird.

7. Verfahren nach einem oder mehreren der vorhergehenden Ansprüche, dadurch gekennzeichnet, daß das nach dem Kondensieren des Wasserdampfes verbleibende Gas einem Gasreservoir bzw. einem Brenner zugeleitet wird.

8. Verfahren nach einem oder mehreren der vorhergehenden Ansprüche, dadurch gekennzeichnet, daß das beim Kühlen des Wasserdampfes entstehende Kondensat zwischengelagert wird.

9. Verfahren nach Anspruch 8, dadurch gekennzeichnet, daß das Kondensat in ein Setzbecken od.dgl. geleitet wird.

10. Verfahren nach Anspruch 8 oder 9, dadurch gekennzeichnet, daß das Kondensat in eine Sickergrube od.dgl. geleitet wird.

11. Verfahren nach einem oder mehreren der Ansprüche 8 bis 10, dadurch gekennzeichnet, daß das Kondensat beim Zwischenlagern gerührt wird.

12. Verfahren nach einem oder mehreren der Ansprüche 8 bis 11, dadurch gekennzeichnet, daß das Kondensat beim Zwischenlagern umgewälzt wird.

13. Verfahren nach einem oder mehreren der vorhergehenden Ansprüche, dadurch gekennzeichnet, daß der beim Erwärmen der aufzubereitenden Flüssigkeit entstehende Wasserdampf und/oder das aus dem Wasserdampf entstehende Kondensat im Wärmeaustausch mit Heiz-oder Brauchwasser gekühlt wird.

14. Verfahren nach Anspruch 13, dadurch gekennzeichnet, daß die aufzubereitende Flüssigkeit vor dem/beim Erwärmen auf die erste Arbeitstemperatur und/oder die Siedetemperatur mit dem erwärmten Heiz-oder Brauchwasser (vor-)erwärmt wird.

15. Verfahren nach einem oder mehreren der vorhergehenden Ansprüche, dadurch gekennzeichnet, daß wenigstens ein Teil des beim Erwärmen der aufzubereitenden Flüssigkeit entstehenden Dampfes überhitzt wird und nach einer Reinigung einem Stromaggregat zugeführt wird.

16. Verfahren nach einem oder mehreren der vorhergehenden Ansprüche, dadurch gekennzeichnet, daß der nach dem Verdampfen der Flüssigkeitsbestandteile zurückbleibende Feststoff getrocknet wird.

17. Verfahren nach einem oder mehreren der vorhergehenden Ansprüche, insbesondere nach Anspruch 16, dadurch gekennzeichnet daß der nach dem Verdampfen der Flüssigkeitsbestandteile zurückbleibende Feststoff gepreßt wird.

18. Verfahren nach Anspruch 16 oder 17, dadurch gekennzeichnet, daß der Feststoff mit wenigstens einem brennbaren Füllstoff wie Torf, Sägemehl od.dgl. vermengt wird.

19. Verfahren nach einem oder mehreren der vorhergehenden Ansprüche, insbesondere zum Aufbereiten von (Haushalts-)Abwasser, dadurch gekennzeichnet, daß die kondensierte Flüssigkeit vor einem Verrieseln in den Untergrund in/durch ein bepflanztes Sammelbecken geleitet wird, welches mit einer Be pflanzung versehen ist, die Ammoniak aus der kondensierten Flüssigkeit aufnimmt.

20. Verfahren nach Anspruch 19, dadurch gekennzeichnet, daß das Sammelbecken ein natürliches Wasserreservoir ist bzw. als solches derart angelegt wird, daß es umfangreich zu bepflanzen ist.

21. Verfahren nach Anspruch 20, dadurch gekennzeichnet, daß das Sammelbecken mit zahlreichen Inseln oder/und Halbinseln versehen wird, die mit einer Bepflanzung versehen werden.

22. Verfahren nach einem oder mehreren der Ansprüche 19 bis 21, dadurch gekennzeichnet, daß die Bepflanzung aus Macrophyten besteht.

23. Verfahren nach einem oder mehreren der Ansprüche 19 bis 22, dadurch gekennzeichnet, daß die kondensierte Flüssigkeit vor dem Einleiten in das Sammelbecken zwischengelagert wird.

24. Verfahren nach einem oder mehreren der Ansprüche 19 bis 23, dadurch gekennzeichnet, daß die kondensierte Flüssigkeit vor dem Einleiten in das Sammelbecken in einen Vorfluter geleitet wird.

25. Einrichtung zur Aufbereitung von verschmutzten Flüssigkeiten wie z.B. Gülle, Abwasser od.dgl., nach einem oder mehreren der vorhergehenden Ansprüche, gekennzeichnet durch einen mit wenigstens einer Heizeinrichtung (8; 33; 34) beheizbaren Aufnahmebehälter (1), der mit einem Einlaß (4) für die aufzubereitende Gülle (2) sowie wenigstens einem Auslaß (13) für das entstehende Biogas bzw. den beim Erwärmen entstehenden Wasserdampf versehen ist und eine verschließbare Entnahmeöffnung (47) für die nach dem Verdampfen verbleibenden Feststoffe aufweist, wobei der den Wasserdampf abführenden Leitung (13, 13') eine Kühleinrichtung (26, 26') zugeordnet ist, mittels welcher der Wasserdampf zu kondensieren ist.

26. Einrichtung nach Anspruch 25, dadurch gekennzeichnet, daß die Heizeinrichtung (33; 34) steuer-bzw. regelbar ist.

27. Einrichtung nach Anspruch 25 oder 26, dadurch gekennzeichnet, daß die Heizeinrichtung einen Brenner (33) aufweist, der mit einer zu einem Gasbehälter (31) führenden Leitung (32) verbunden ist.

28. Einrichtung nach einem oder mehreren der Ansprüche 25 bis 27, dadurch gekennzeichnet, daß der Aufnahmebehälter (1) mittels eines Wärmetauschers (8) vorzuwärmen ist, der mit dem erwärmten Kühlwasser der Kühleinrichtung (26, 26') zu beschicken ist.

29. Einrichtung nach einem oder mehreren der Ansprüche 25 bis 28, dadurch gekennzeichnet, daß dem Aufnahmebehälter (1) ein mit wenigstens einem Rührwerk (21) versehener zweiter Behälter (19) nachgeordnet ist, in dem das beim Abkühlen des Wasserdampfes kondensierende Kondensat zu rühren ist.

30. Einrichtung nach Anspruch 29, dadurch gekennzeichnet, daß der zweite Behälter (19) mit einer von seinem unteren Abschnitt zu seinem oberen Abschnitt führenden Rückführleitung (27) versehen ist, durch welche das in ihm enthaltene Kondensat mittels einer Umwälzpumpe (28) umzuwälzen ist.

31. Einrichtung nach einem oder mehreren der Ansprüche 25 bis 30, insbesondere nach Anspruch 24 oder 25, dadurch gekennzeichnet, daß dem Aufnahmebehälter (1) bzw. dem zweiten Behälter (19) ein dritter Behälter (31) zur Aufnahme von Biogas nachgeordnet ist.

32. Einrichtung nach Anspruch 30 oder 31, dadurch gekennzeichnet, daß der zweite Behälter (19) an seinem oberen Endabschnitt über eine Leitung (46) mit dem Aufnahmebehälter (1) verbunden ist, in welcher eine Pumpe (44) angeordnet ist, mittels welcher im oberen Abschnitt des zweiten Behälters (19) entstehender Schaum in den ersten Behälter zurückzupumpen ist.

33. Einrichtung nach einem oder mehreren der Ansprüche 25 bis 32, dadurch gekennzeichnet, daß der Aufnahmebehälter (1) an seinem oberen Endabschnitt mit einer Dampfleitung (41) versehen ist, welche über eine Reinigungseinrichtung (16) zu einem Stromaggregat (37) führt.

34. Einrichtung nach einem oder mehreren der Ansprüche 25 bis 33, dadurch gekennzeichnet, daß die Heizeinrichtung eine elektrische Heizung (34) aufweist.

0 245 775